Europäisches Patentamt

European Patent Office

Office européen des brevets

(19)

(11) EP 0 719 389 B1

## (12) FASCICULE DE BREVET EUROPEEN

(45) Date de publication et mention
de la délivrance du brevet:
**25.03.1998  Bulletin 1998/13**

(21) Numéro de dépôt: **95923421.2**

(22) Date de dépôt: **20.06.1995**

(51) Int Cl.⁶: **F16D 28/00**, F16D 29/00

(86) Numéro de dépôt international:
**PCT/FR95/00821**

(87) Numéro de publication internationale:
**WO 95/35452 (28.12.1995 Gazette 1995/55)**

(54) **DISPOSITIF DE COMMANDE, NOTAMMENT POUR EMBRAYAGE DE VEHICULE AUTOMOBILE**

VON EINEM ELEKTROMOTOR GESTEUERTE STEUERVORRICHTUNG MIT HYDRAULISCHEM ZYLINDER, INSBESONDERE FÜR EINE KRAFTFAHRZEUGKUPPLUNG

CONTROL DEVICE, PARTICULARLY FOR A MOTOR VEHICULE CLUTCH

(84) Etats contractants désignés:
**DE ES GB IT SE**

(30) Priorité: **20.06.1994  FR 9407518**

(43) Date de publication de la demande:
**03.07.1996  Bulletin 1996/27**

(73) Titulaire: **VALEO**
**75017 Paris (FR)**

(72) Inventeur: **CHAZOT, Frank**
**F-95580 Margency (FR)**

(74) Mandataire: **Gamonal, Didier**
**Valeo Management Services**
**Propriété Industrielle**
**2, rue André Boulle,**
**B.P. 150**
**94004 Créteil (FR)**

(56) Documents cités:
**FR-A- 2 564 220      FR-A- 2 611 615**
**FR-A- 2 614 661**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne d'une manière générale les dispositifs de commande du genre comportant un moteur électrique, qui, par l'intermédiaire d'une transmission, agit sur le piston d'un vérin hydraulique formant un élément de sortie pour l'ensemble, des moyens élastiques d'assistance, qui, en parallèle vis-à-vis du moteur électrique, agissent sur l'un des organes constitutifs de la transmission, et des moyens mécaniques de compensation, qui assurent une modulation contrôlée de l'action des moyens élastiques d'assistance sur l'organe en question de la transmission. Ces dispositifs de commande trouvent notamment leur application pour le pilotage de l'embrayage d'un véhicule automobile, tel que décrit par exemple dans les documents FR-A-2 523 743, 2 564 920 et 2 541 793 (US-A-4,878,396, US-A-4,671,400).

Lors d'une commande en dégagement d'un tel embrayage, le moteur électrique assure, par l'intermédiaire de la transmission et de l'élément de sortie, le positionnement convenable de la butée de débrayage, l'élément de sortie agissant par exemple en conséquence sur la fourchette de débrayage usuellement associée à celle-ci, cependant que, sous le contrôle des moyens mécaniques de compensation, les moyens élastiques d'assistance développent l'effort axial nécessaire pour équilibrer la force antagoniste due au diaphragme de l'embrayage.

Grâce à ces moyens élastiques d'assistance, il est avantageusement possible de se satisfaire d'un moteur électrique de puissance relativement faible.

Conjointement, les moyens mécaniques de compensation permettent avantageusement d'adapter ces moyens élastiques d'assistance aux caractéristiques propres du diaphragme.

L'invention vise plus particulièrement le cas où l'élément de sortie est un vérin hydraulique, qui permet avantageusement de rattraper plus facilement les effets dus à l'usure inévitable des garnitures de frottement du disque de friction de l'embrayage, et sur le piston duquel le moteur électrique agit par l'intermédiaire de la transmission. c'est le cas, par exemple, dans les documents FR-A-2 611 615 et 2 614 661.

Dans ces documents, la transmission comporte deux organes, à savoir une vis sans fin, qui est calée en rotation sur l'arbre de sortie du moteur électrique, et une roue dentée, vis-à-vis de laquelle la vis sans fin intervient tangentiellement, et à laquelle est articulé, à la manière d'une bielle, un poussoir agissant sur le piston du vérin hydraulique, cependant que, conjointement, les moyens mécaniques de compensation résultent de ce que les moyens élastiques d'assistance agissent en un point de cette roue dentée angulairement écarté du point auquel lui est articulé le poussoir en question.

Eu égard au fait que cette transmission doit par ailleurs assurer un certain rapport de réduction, la roue dentée présente inévitablement un diamètre relativement important, au prix d'un encombrement de l'ensemble de nature à en rendre malaisée l'implantation dans un environnement encombré.

L'invention a pour objet un dispositif de commande du genre concerné avantageusement susceptible d'un encombrement réduit et présentant en outre d'autres avantages.

Ce dispositif de commande est caractérisé en ce que les moyens mécaniques de compensation comportent au moins un train de galets, qui, monté rotatif autour d'un axe fixe orthogonal à l'axe du vérin hydraulique, comporte, à l'écart de cet axe fixe, au moins deux galets, à savoir, un premier galet établi au contact d'un premier plateau qui, lié en mouvement à l'organe concerné de la transmission, est mobile axialement entre deux positions, l'une reculée, l'autre avancée, et un deuxième galet établi au contact d'un deuxième plateau, sur lequel portent les moyens élastiques d'assistance, et qui, tout en étant calé en rotation sur le premier plateau, est monté mobile axialement par rapport à celui-ci.

Le dispositif de commande ainsi constitué peut avantageusement se présenter sous un encombrement relativement réduit, tant axialement que transversalement. Il en est d'autant plus ainsi que ses principaux constituants, à savoir le moteur électrique, le ressort constituant en pratique les moyens élastiques d'assistance, et le vérin hydraulique, peuvent avantageusement s'étendre suivant un même axe.

Préférentiellement, la transmission intervenant entre le moteur électrique et le piston du vérin hydraulique comporte deux organes en relation de vis-écrou l'un par rapport à l'autre, ce qui est favorable, également, à une réduction de l'encombrement de l'ensemble, tant axialement que transversalement.

Du fait, par ailleurs, de la mise en oeuvre de galets dans la transmission, les frottements sont réduits, au bénéfice du rendement.

En outre, le nombre de pièces à mettre en oeuvre pour l'ensemble est lui aussi avantageusement réduit.

Enfin, il peut avantageusement être obtenu une bonne dissociation de la partie hydraulique et de la partie mécanique.

A cet égard, le dispositif de commande suivant l'invention est préférentiellement formé, de manière distincte, d'une part, d'un sous-ensemble mécanique, qui comporte le moteur électrique, la transmission, les moyens élastiques d'assistance et les moyens mécaniques de compensation, et, d'autre part, d'un sous-ensemble hydraulique, qui est rapporté sur le sous-ensemble mécanique, et qui comporte le vérin hydraulique.

Préférentiellement, également, le corps du vérin hydraulique est engagé axialement dans le sous-ensemble mécanique, et, outre qu'il en résulte encore une réduction de l'encombrement axial de l'ensemble, le corps de ce vérin hydraulique peut alors avantageusement former, si désiré, une portée cylindrique de guidage pour le premier plateau des moyens mécaniques de compensation, au bénéfice des conditions de travail de ceux-ci.

En variante, le guidage de ce premier plateau peut également être assuré par des colonnettes dûment prévues à cet effet.

Les caractéristiques et avantages de l'invention ressortiront d'ailleurs de la description qui va suivre, à titre d'exemple, en référence aux dessins schématiques annexés sur lesquels :

- la figure 1 est une vue partie en coupe axiale et partie en élévation d'un dispositif de commande suivant l'invention ;
- la figure 2 est une vue de bout de ce dispositif de commande, suivant la flèche II de la figure 1 ;
- la figure 3 en est une vue de bout du côté opposé au précédent, suivant la flèche III de la figure 1 ;
- la figure 4 reprend, à échelle supérieure, le détail de la figure 1 repéré par un encart IV sur cette figure 1, pour la position reculée initiale du premier plateau que comportent les moyens mécaniques de compensation du dispositif de commande suivant l'invention ;
- la figure 5 est une vue analogue à celle de la figure 4, pour une position de ce premier plateau intermédiaire entre sa position reculée initiale et sa position avancée finale ;
- la figure 6 est une vue analogue à celles des figures 4 et 5, pour la position avancée finale de ce premier plateau ;
- la figure 7 est un diagramme illustrant les effets des moyens mécaniques de compensation mis en oeuvre dans le dispositif de commande suivant l'invention ;
- la figure 8 est une vue en coupe transversale d'une variante de réalisation du dispositif de commande suivant l'invention.

Tel qu'illustré sur ces figures, le dispositif de commande 10 suivant l'invention comporte, globalement, un moteur électrique 11, qui, par l'intermédiaire d'une transmission 12, ici mécanique, agit sur le piston 13 d'un vérin hydraulique 14 formant un élément de sortie pour l'ensemble, des moyens élastiques d'assistance 15, qui, en parallèle vis-à-vis du moteur électrique 11, agissent, tel qu'explicité ultérieurement, sur l'un, 16, des organes constitutifs de la transmission 12, et des moyens mécaniques de compensation 17, qui assurent une modulation contrôlée de l'action des moyens élastiques d'assistance 15 sur cet organe 16.

Ici, le dispositif de commande 10 suivant l'invention est formé, de manière distincte, d'une part, d'un sous-ensemble mécanique 10A, qui comporte le moteur électrique 11, la transmission 12, les moyens élastiques d'assistance 15 et les moyens mécaniques de compensation 17, et d'autre part, d'un sous-ensemble hydraulique 10B, qui est rapporté sur le sous-ensemble mécanique 10A, ici par deux vis 18, et qui comporte le vérin hydraulique 14.

Ici, le sous-ensemble mécanique 10A comporte un boîtier 20, de forme générale parallélépipédique, dont le corps 21 contient la transmission 12, les moyens élastiques d'assistance 15 et les moyens mécaniques de compensation 17, et dont le couvercle 22, rapporté sur le corps 21 par des vis 23, porte extérieurement, ici d'un seul tenant, le carter du moteur électrique 11.

Ici, le sous-ensemble hydraulique 10B intervient du côté du fond 26 du corps 21, et, donc, du côté du boîtier 20 opposé au moteur électrique 11.

Le corps 27 du vérin hydraulique 14 est, ici, au moins pour partie engagé axialement dans le sous-ensemble mécanique 10A, à la faveur d'une ouverture 28 prévue à cet effet dans le fond 26 du corps 21 du boîtier 20, dans la zone médiane de ce fond 26.

Par un flasque 29, qui s'étend transversalement sensiblement à la moitié de sa longueur, et à la faveur duquel interviennent les vis 18, le corps 27 du vérin hydraulique 14 est adossé au fond 26 du corps 21 du bottier 20.

Des bornes de connexion 30 permettent l'alimentation électrique du moteur électrique 11.

Ici, l'arbre 31 de ce moteur électrique 11 traverse, avec interposition d'un roulement à billes 32, le couvercle 22 du bottier 20, à la faveur d'une ouverture 33 prévue à cet effet dans ce couvercle 22, dans la zone médiane de celui-ci, et il s'étend suivant l'axe A1 du vérin hydraulique 14, c'est-à-dire suivant la direction de déplacement du piston 13 de celui-ci.

Ici, la transmission 12 comporte deux organes en relation de vis-écrou l'un par rapport à l'autre, à savoir, d'une part, une tige filetée 34, qui est solidaire, tant en rotation qu'en translation, de l'arbre 31 du moteur électrique 11, en étant par exemple d'un seul tenant avec cet arbre 31, et, d'autre part, une douille taraudée, qui est en prise à vissage avec la tige filetée 34, et qui forme l'organe 16 sur lequel agissent, tel qu'explicité ultérieurement, les moyens élastiques d'assistance 15.

Pour éviter tout jeu entre elle et la tige filetée 34, cette douille taraudée est ici ouverte longitudinalement par une ou plusieurs fentes 35, et, sur une partie au moins de sa longueur, elle est entourée, extérieurement, par un ressort de torsion 36 qui est sous contrainte.

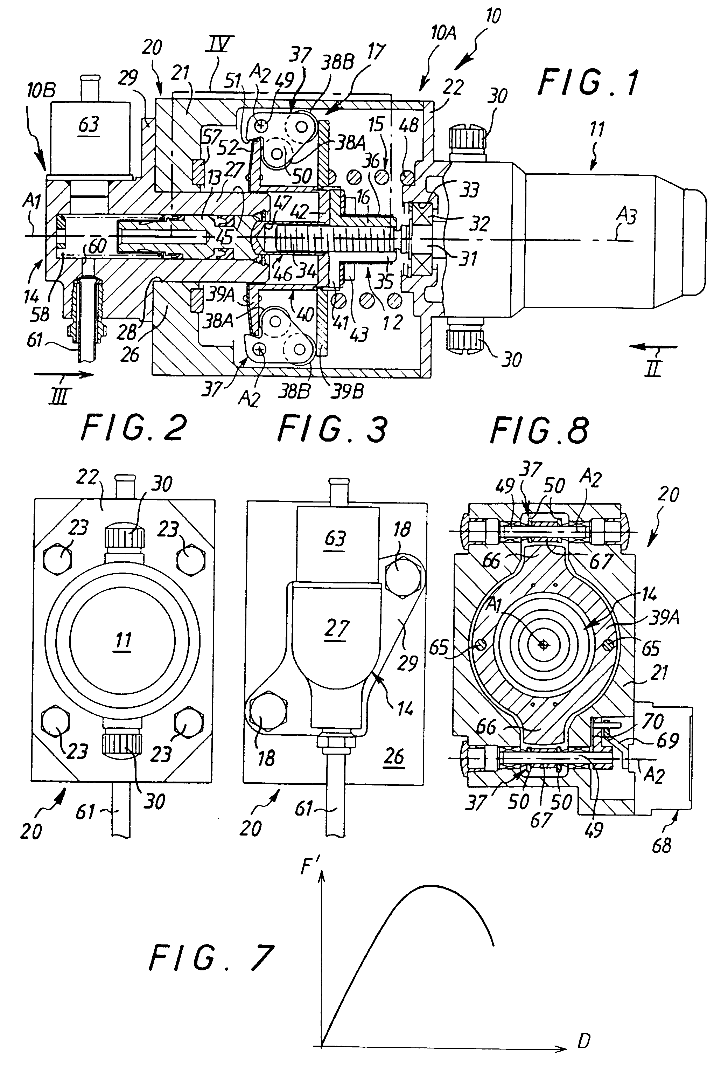

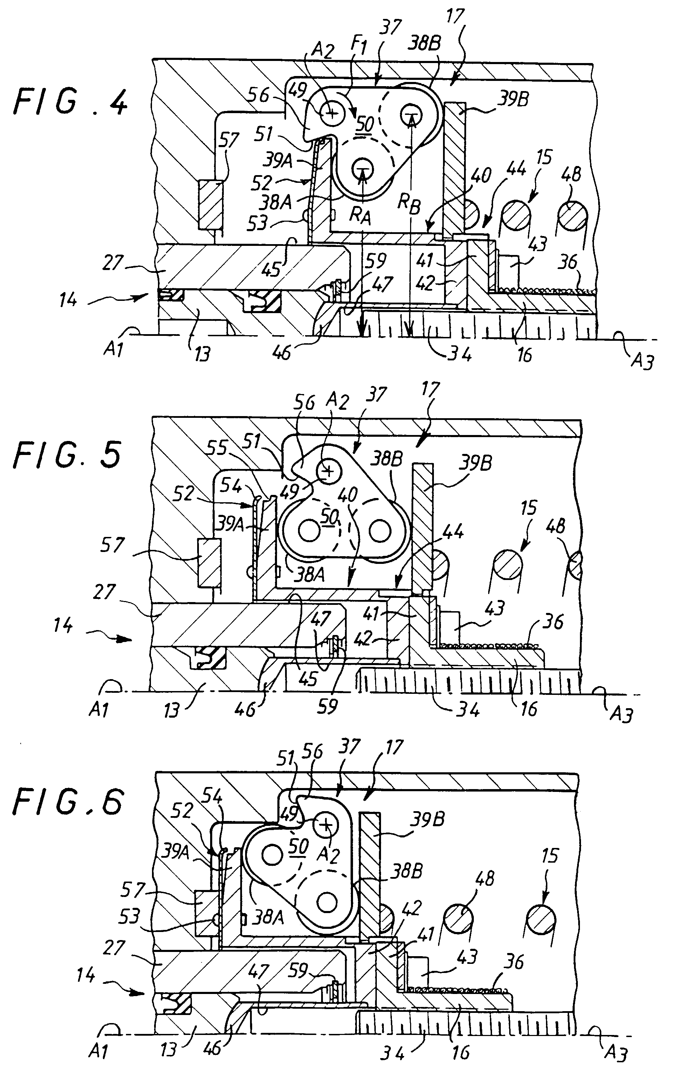

Suivant l'invention, les moyens mécaniques de compensation 17 comportent au moins un train de galets 37, qui, monté rotatif autour d'un axe A2 fixe par rapport au boîtier 20 et orthogonal à l'axe A1 du vérin hydraulique 14, comporte, à l'écart de cet axe fixe A2, au moins deux galets 38A, 38B, à savoir, un premier galet 38A établi au contact d'un premier plateau 39A, qui, lié en mouvement à l'organe 16 de la transmission 12, est mobile axialement entre deux positions, l'une reculée, figures 1 et 4, l'autre avancée, figure 6, et un deuxième galet 38B établi au contact d'un deuxième plateau 39B, sur lequel portent les moyens élastiques d'assistance 15, et qui, tout en étant calé en rotation sur le premier plateau 39A, est monté mobile axialement par rapport à celui-ci.

Ici, l'axe fixe A2 est matérialisé par un arbre 49 monté rotatif dans le corps 21 du boîtier 20.

Les deux plateaux 39A, 39B s'étendent transversalement par rapport à l'axe A1 du vérin hydraulique 14, coaxialement à celui-ci.

Le premier plateau 39A s'étend du côté du fond 26 du corps 21 du boîtier 20, et le deuxième plateau 39B du côté du couvercle 22 de ce boîtier 20.

Ici, le premier plateau 39A forme une collerette à l'extrémité d'une cuvette 40, et la douille taraudée formant l'organe 16 de la transmission 12 est adossée par une collerette 41 au fond 42 de cette cuvette 40, en étant fixée à ce fond 42 par des vis 43.

Le premier plateau 39A est ainsi solidaire, tant en translation qu'en rotation, de l'organe 16 de la transmission 12.

Pour le guidage en translation et l'entraînement en rotation du deuxième plateau 39B, il est prévu un montage à cannelures 44 entre celui-ci et l'équipage formé par la cuvette 40 et la douille taraudée constituant l'organe 16 de la transmission 12.

Intérieurement, la cuvette 40 a un diamètre légèrement supérieur au diamètre extérieur du corps 27 du vérin hydraulique 14, et, par son débouché, elle est engagée sur celui-ci.

Ainsi, si désiré, et tel que représenté sur les figures 1 à 6 au jeu de montage près, le corps 27 du vérin hydraulique 14 peut former extérieurement une portée cylindrique de guidage 45 pour le premier plateau 39A.

Sur le fond 42 de la cuvette 40 fait saillie axialement un montant 46 par lequel l'organe 16 de la transmission 12, et, donc, le moteur électrique il, agissent sur le piston 13 du vérin hydraulique 14.

Ici, ce montant 46 présente axialement un alésage interne 47 borgne, pour recevoir la tige filetée 34, au bénéfice de la compacité axiale de l'ensemble.

Ici, les surfaces par lesquelles le montant 46 et le piston 13 du vérin hydraulique 14 portent axialement l'un sur l'autre sont sphériques, pour une compensation d'une éventuelle obliquité entre l'axe A3 du moteur électrique 11 et celui Al du vérin hydraulique 14.

Ici, les moyens élastiques d'assistance 15 comportent un ressort 48, du type ressort à boudin, coaxial du vérin hydraulique 14. Ce ressort 48 s'étend autour de la douille taraudée formant l'organe 16 de la transmission 12.

Il prend appui sur le couvercle 22 du boîtier 20 et porte sur le deuxième plateau 39B des moyens mécaniques de compensation 17.

Ici, les moyens mécaniques de compensation 17 comportent deux trains de galets 37, qui sont disposés en positions diamétralement opposées l'un par rapport à l'autre de part et d'autre de l'axe A1 du vérin hydraulique 14, en étant symétriques l'un de l'autre par rapport à cet axe A1, et qui interviennent l'un et l'autre entre les deux plateaux 39A, 39B.

Ici, les deux galets 38A, 38B de chacun de ces trains de galets 37 sont montés rotatifs entre deux joues 50, autour d'axes parallèles à l'axe fixe A2 correspondant, et ils interviennent dans un même plan diamétral par rapport au vérin hydraulique 14.

Les deux galets 38A, 38B sont établis en triangle avec l'axe fixe A2.

Pour la position reculée du premier plateau 39A, figures 1 et 4, le galet 38B établi au contact du deuxième plateau 39B est aligné avec l'axe fixe A2 parallèlement à l'axe A1 du vérin hydraulique 14.

Ici, chacun des trains de galets 37 comporte, en oblique, à l'écart de son axe fixe A2, une rampe 51, qui est interposée sur le trajet du premier plateau 39A entre ses positions reculée et avancée.

En position reculée, figures 1 et 4, le premier plateau 39A porte sur cette rampe 51 par l'intermédiaire d'un ressort 52, ici un ressort à lame, qui se trouve alors sous contrainte. Ici, le ressort 52 est rapporté par des rivets 53 sur le premier plateau 39A, du côté de celui-ci opposé au deuxième plateau 39B.

Il comporte, à son extrémité libre, un bec 54, par lequel il peut venir s'encastrer sur le premier plateau 39A, à la faveur d'un décrochement 55 prévu à cet effet sur la tranche périphérique de celui-ci.

Ici, la rampe 51 de chacun des trains de galets 37 est formée par la tranche des joues 50 de celui-ci, et elle appartient à un bec 56 que forment ces joues 50 du côté de l'axe fixe A2.

Ici, le fond 26 du corps 21 du boîtier 20 porte, annulairement, sur sa surface interne, autour du corps 27 du vérin hydraulique 14, un anneau 57, en matière élastique, pour former une butée de fin de course pour le premier plateau 39A lorsque celui-ci est en position avancée, figure 6.

Ici, le piston 13 du vérin hydraulique 14 est soumis à un ressort de rappel 58 qui, prenant appui sur le fond borgne du corps 27 de ce vérin hydraulique 14, le sollicite en permanence en direction du montant 46 du sous-ensemble mécanique 10A.

Mais, pour la retenue de ce piston 13 en l'absence du sous-ensemble mécanique 10A avant l'assemblage de celui-ci avec le sous-ensemble hydraulique 10B, il est prévu, au débouché du corps 27 du vérin hydraulique 14, un anneau élastique fendu 59.

Par un ajutage 60, le corps 27 du vérin hydraulique 14 est en liaison avec une canalisation 61 susceptible de le raccorder à l'embrayage à commander.

Ici, le vérin hydraulique 14, et, plus précisément, le corps 27 de celui-ci, est par ailleurs sous le contrôle d'une électrovanne 63, qui, lorsqu'elle est sous tension, c'est-à-dire lorsqu'elle est alimentée électriquement, est fermée.

S'agissant du pilotage d'un embrayage, et en supposant celui-ci engagé, l'organe 16 de la transmission 12 est initialement en position reculée, comme représenté sur les figures 1 et 4.

Il en est de même du premier plateau 39A des moyens mécaniques de compensation 17, et, donc, de leur deuxième plateau 39B.

Sous la sollicitation de son ressort de rappel 58, le piston 13 du vérin hydraulique 14 est lui aussi en position reculée, en butée contre le montant 46 du sous-ensemble mécanique 10A.

La pression dans le corps 27 du vérin hydraulique 14 est alors relativement faible. Comme indiqué précédemment, les trains de galets 37 sont crochetés par leur bec 56 sur le premier plateau 39A des moyens mécaniques de compensation 17, et leur galet 38B est radialement à niveau avec leur axe fixe A2.

Soit $R_B$ le rayon de l'ensemble sur lequel se trouve alors ce galet 38B par rapport à l'axe A1 du vérin hydraulique 14.

Le galet 38A des trains de galets 37 se trouve conjointement sur un rayon $R_A$ inférieur au rayon $R_B$ précédent.

A travers successivement, le deuxième plateau 39B, les trains de galets 37, le premier plateau 39A et la cuvette 40, le ressort 48 constituant les moyens élastiques d'assistance 15 est contrebuté par la douille taraudée constituant l'organe 16 de la transmission 12, cette douille taraudée étant dûment positionnée par la tige filetée 34, et maintenue en position axiale par celle-ci, sous le contrôle du moteur électrique 11.

Le ressort 48 est donc alors en pratique sans effet.

Lors d'une commande en dégagement de l'embrayage, le moteur électrique 11, dûment alimenté en conséquence, provoque, par vissage, le déplacement de l'organe 16 de la transmission 12 de sa position reculée représentée sur les figures 1 et 4 à sa position avancée représentée sur la figure 6.

Par l'intermédiaire du deuxième plateau 39B, des trains de galets 37, du premier plateau 39A, et de la cuvette 40, le ressort 48 des moyens élastiques d'assistance 15 accompagne l'organe 16 de la transmission 12 dans son déplacement axial, en soumettant conjointement celle-ci à un effort axial d'assistance F' qui, en parallèle avec l'effort axial que développe conjointement le moteur électrique 11 par l'intermédiaire de la transmission 12, permet un déplacement axial concomitant du piston 13 du vérin hydraulique 14, et, donc, une élévation de la pression dans le corps 27 de ce vérin hydraulique 14.

Mais, du fait des moyens mécaniques de compensation 17, cet effort axial d'assistance F' se trouve dans la relation suivante vis-à-vis de la force axiale F réellement développée par le ressort 48, compte tenu du coefficient multiplicateur dû au décalage radial entre les galets 38B, 38A des trains de galets 37 de ces moyens mécaniques de compensation 17 :

$$F' = F \times \frac{R_A}{R_B}$$

Dès le début du déplacement axial du premier plateau 39A, et du fait de l'action de ce premier plateau 39A sur leur rampe 51, accentuée par le ressort 52, les trains de galets 37 sont contraints à pivoter autour de leur axe fixe A2, tel que schématisé par une flèche $F_1$ pour l'un d'eux sur la figure 4, ce qui conduit le galet 38B de ces trains de galets 37 à se rapprocher de l'axe A1 du vérin hydraulique 14, au prix, conjointement, d'un écartement axial relatif du deuxième plateau 39B par rapport au premier plateau 39A.

Ainsi, le rayon $R_B$ diminue, tandis que le rayon $R_A$ reste sensiblement constant.

Par suite, et tel que schématisé par le diagramme de la figure 7, sur lequel on a reporté en abscisses le déplacement axial D de l'organe 16 de la transmission 12 et en ordonnées l'effort axial d'assistance F' développé par le ressort 48 au niveau de cet organe 16, la courbe représentative de cet effort axial d'assistance F', d'abord croissante, passe par un maximum, qui correspond à un alignement des galets 38A, 38B des trains de galets 37 parallèlement à l'axe A1 du vérin hydraulique 14, tel que représenté pour l'un de ces trains de galets 37 à la figure 5, avant de devenir décroissante.

Cette courbe représentative a ainsi l'allure de la courbe caractéristique du diaphragme des embrayages, ce qui permet à la pression dans le corps 27 du vérin hydraulique 14 d'être à tout instant adaptée au mieux à un tel diaphragme.

Lors d'une commande en réengagement de l'embrayage, le moteur électrique 11, dûment alimenté en conséquence, ramène l'organe 16 de la transmission 12 en position reculée initiale, ce qui permet de manière concomitante le recul du piston 13 du vérin hydraulique 14. En cas d'incident, un réengagement de l'embrayage est toujours possible ; en effet, n'étant plus alimentée électriquement, l'électrovanne 63 s'ouvre.

Cette électrovanne 63 permet en outre un rattrapage d'usure, par une alimentation correspondante du vérin hydraulique 14.

Dans la variante de réalisation de la figure 8, le guidage du premier plateau 39A est assuré par des colonnettes 65 dûment prévues à cet effet parallèlement à l'axe A1 du vérin hydraulique 14 et solidaires du corps 21 du boîtier 20.

Dans cette variante, le premier plateau 39A présente des bras 66 pour coopérer avec les trains de galets 37 et il est prévu une douille entretoise 67 entre les joues 50 de ceux-ci.

Enfin, dans cette variante, l'un des trains de galets 37 commande un potentiomètre 68 rapporté extérieurement sur le corps 21 du boîtier 20, pour permettre un repérage de position. Ici, le curseur, non visible sur la figure, de ce potentiomètre 68, est calé par un bras 69 sur un bras 70 lui-même calé sur l'arbre 49 matérialisant l'axe fixe A2, suffisamment prolongé à cet effet, du train de galets 37 concerné.

Outre leur fonction de guidage, les colonnettes 65 assurent conjointement un blocage en rotation du premier plateau 39A.

D'autres moyens sont envisageables pour ce blocage en rotation.

Par exemple, il peut être prévu à cet effet une liaison entre le premier plateau 39A et le corps 21 du boîtier 20, telle que, par exemple, une liaison par des languettes, ou une liaison à tenon et mortaise.

Il peut également être prévu une liaison à cannelures avec le corps 27 du vérin hydraulique 14.

La présente invention ne se limite d'ailleurs pas aux formes de réalisation décrites et représentées, mais englobe toute variante d'exécution et/ou de combinaison de leurs divers éléments, dans les limites fixées par les revendications.

**Revendications**

1. Dispositif de commande du genre comportant un moteur électrique (11), qui, par l'intermédiaire d'une transmission (12), agit sur le piston (13) d'un vérin hydraulique (14) formant un élément de sortie pour l'ensemble, des moyens élastiques d'assistance (15), qui, en parallèle vis-à-vis du moteur électrique (11), agissent sur l'un, (16), des organes constitutifs de ladite transmission (12), et des moyens mécaniques de compensation (17) qui assurent une modulation contrôlée de l'action desdits moyens élastiques d'assistance (15) sur ledit organe (16), caractérisé en ce que lesdits moyens mécaniques de compensation (17) comportent au moins un train de galets (37), qui, monté rotatif autour d'un axe fixe (A2) orthogonal à l'axe (A1) du vérin hydraulique (14), comporte, à l'écart de cet axe fixe (A2), au moins deux galets (38A, 38B), à savoir un premier galet (38A) établi au contact d'un premier plateau (39A), qui, lié en mouvement à l'organe (16) de la transmission (12), est mobile axialement entre deux positions, l'une reculée, l'autre avancée, et un deuxième galet (38B) établi au contact d'un deuxième plateau (39B), sur lequel portent les moyens élastiques d'assistance (15), et qui, tout en étant calé en rotation sur le premier plateau (39A), est monté mobile axialement par rapport à celui-ci.

2. Dispositif de commande suivant la revendication 1, caractérisé en ce que, à l'écart de l'axe fixe (A2), le train de galets (37) comporte, en oblique, une rampe (51) qui est interposée sur le trajet du premier plateau (39A) entre ses positions reculée et avancée.

3. Dispositif de commande suivant la revendication 2, caractérisé en ce que, en position reculée, le premier plateau (39A) porte sur la rampe (51) du train de galets (37) par l'intermédiaire d'un ressort (52) sous contrainte.

4. Dispositif de commande suivant la revendication 2 ou 3, caractérisé en ce que, pour la position reculée du premier plateau (39A), le galet (38B) établi au contact du deuxième plateau (39B) est aligné avec l'axe fixe (A2) parallèlement à l'axe (A1) du vérin hydraulique (14).

5. Dispositif de commande suivant l'une quelconque des revendications précédentes, caractérisé en ce que l'arbre (31) du moteur électrique (11) s'étend suivant l'axe (A1) du vérin hydraulique (14).

6. Dispositif de commande suivant la revendication 5, caractérisé en ce que la transmission (12) comporte deux organes en relation de vis-écrou l'un par rapport à l'autre à savoir une tige filetée (34), qui est solidaire de l'arbre (31) du moteur électrique (11), et une douille taraudée qui, en prise à vissage avec la tige filetée (34), forme ledit organe (16).

7. Dispositif de commande suivant la revendication 6, caractérisé en ce que les moyens élastiques d'assistance (15) comportent un ressort (48), de type ressort à boudin, coaxial du vérin hydraulique (14).

8. Dispositif de commande suivant la revendication 7, caractérisé en ce que le ressort (48) des moyens élastiques d'assistance (15) s'étend autour de la douille taraudée formant l'organe (16) de la transmission (12).

9. Dispositif de commande suivant l'une quelconque des revendications précédentes, caractérisé en ce qu'il est formé, de manière distincte, d'une part, d'un sous-ensemble mécanique (10A), qui comporte le moteur électrique (11), la transmission (12), les moyens élastiques d'assistance (15) et les moyens mécaniques de compensation (17), et, d'autre part, d'un sous-ensemble hydraulique (10B), qui est rapporté sur le sous-ensemble mécanique (10A), et qui comporte le vérin hydraulique (14).

10. Dispositif de commande suivant la revendication 9, caractérisé en ce que le corps (27) du vérin hydraulique (14) est au moins pour partie engagé axialement dans le sous-ensemble mécanique (10A).

11. Dispositif de commande suivant l'une quelconque des revendications précédentes, caractérisé en ce que l'un des trains de galets (37) commande un potentiomètre (68).

12. Dispositif de commande suivant l'une quelconque des revendications précédentes, caractérisé en ce que le vérin hydraulique (14) est sous le contrôle d'une électrovanne (63) qui, lorsqu'elle est alimentée électriquement, est fermée.

## Claims

1. A control device of the kind comprising an electric motor (11), which, through a transmission (12), acts on the piston (13) of a hydraulic actuator (14) constituting an output element for the assembly, resilient assisting means (15), which act in parallel with the electric motor (11) on one (16) of the members constituting the said transmission (12), and mechanical compensating means (17) which provide controlled modulation of the action of the said resilient assisting means (15) on the said member (16), characterised in that the said mechanical compensating means (17) include at least one train of rollers (37), which are mounted for rotation about a fixed axis (A2) orthogonal to the axis (A1) of the hydraulic actuator (14) and which comprise, spaced away from the said fixed axis (A2), at least two rollers (38A, 38B), namely a first roller (38A) making contact with a first plate (39A), which is coupled to the member (16) of the transmission (12) for movement therewith and which is movable axially between two positions, one retracted and one deployed, and a second roller (38B) making contact with a second plate (39B), on which the resilient assisting means (15) bear, and which, while being rotatable with the first plate (39A), is mounted for axial movement with respect to the latter.

2. A control device according to Claim 1, characterised in that the train of rollers (37) includes an oblique ramp (51) which is spaced away from the fixed axis (A2) and which is interposed on the path of the first plate (39A) between its retracted and deployed positions.

3. A control device according to Claim 2, characterised in that, in the retracted position, the first plate (39A) bears on the ramp (51) of the train of rollers (37) through a precompressed spring (52).

4. A control device according to Claim 2 or Claim 3, characterised in that, in the retracted position of the first plate (39A), the roller (38B) which makes contact with the second plate (39B) is aligned with the fixed axis (A2) parallel to the axis (A1) of the hydraulic actuator (14).

5. A control device according to any one of the preceding Claims, characterised in that the shaft (31) of the electric motor (11) extends along an axis (A1) of the hydraulic actuator (14).

6. A control device according to Claim 5, characterised in that the transmission (12) includes two members in screw-and-nut relationship with respect to each other, namely a threaded rod (34) which is fixed to the shaft (31) of the electric motor (11), and a threaded sleeve which constitutes the member (16), being in screw-threaded relationship with the threaded rod (34).

7. A control device according to Claim 6, characterised in that the resilient assisting means (15) comprise a spring (48) of the coil spring type, coaxial with the hydraulic actuator (14).

8. A control device according to Claim 7, characterised in that the spring (48) of the resilient assisting means (15) extends around the threaded sleeve constituting the member (16) of the transmission (12).

9. A control device according to any one of the preceding Claims, characterised in that it comprises, separately from each other, firstly a mechanical sub-assembly (10A), which comprises the electric motor (11), the transmission (12), the resilient assisting means (15) and the mechanical compensating means (17), and secondly, a hydraulic sub-assembly (10B) which is attached on the mechanical sub-assembly (10A) and which comprises the hydraulic actuator (14).

10. A control device according to Claim 9, characterised in that the body (27) of the hydraulic actuator (14) is at least partly engaged axially in the mechanical sub-assembly (10A).

11. A control device according to any one of the preceding Claims, characterised in that one of the trains of rollers (37) controls a potentiometer (68).

12. A control device according to any one of the preceding Claims, characterised in that the hydraulic actuator (14) is under the control of an electromechanical valve (63) which is closed when energised electrically.

## Patentansprüche

1. Betätigungsvorrichtung, umfassend einen Elektromotor (11), der über eine Kraftübertragung (12) auf den Kolben (13) eines Hydraulikzylinders (14) einwirkt, der ein Ausgangselement für die Baugruppe bildet, elastische Unterstützungsmittel (15), die parallel gegenüber dem Elektromotor (11) auf eines (16) der Organe, aus denen die besagte Kraftübertragung (12) besteht, einwirken, und mechanische Ausgleichmittel (17), die eine kontrollierte Dosierung der Wirkung der elastischen Unterstützungsmittel (15) auf das besagte Organ (16) herbeiführen , **dadurch gekennzeichnet**, daß die besagten mechanischen Ausgleichmittel (17) mindestens einen Rollensatz (37) umfassen, der drehbar um eine zur Achse (A1) des Hydraulikzylinders (14) rechtwinklige ortsfeste Achse (A2) gelagert ist und in einem Abstand von dieser ortsfesten Achse (A2) mindestens zwei Rollen (38A, 38B) umfaßt, und zwar eine erste Rolle (38A), die mit einer ersten Platte (39A) in Berührung steht, die beweglich mit dem Organ (16) der Kraftübertragung (12) verbunden und axial zwischen zwei Positionen, einer hinteren und einer vorderen Position, beweglich ist, und eine zweite Rolle (38B), die mit einer zweiten Platte (39B) in Berührung steht, auf der die elastischen Unterstützungsmittel (15) aufliegen und die drehfest mit der ersten Platte (39A) verbunden und im Verhältnis zu dieser axial beweglich ist.

2. Betätigungsvorrichtung nach Anspruch 1, **dadurch gekennzeichnet**, daß der Rollensatz (37) schräg, in einem Abstand von der ortsfesten Achse (A2), eine Rampe (51) umfaßt, die auf dem Verlauf der ersten Platte (39A) zwischen ihrer hinteren und vorderen Position eingefügt ist.

3. Betätigungsvorrichtung nach Anspruch 2, **dadurch gekennzeichnet**, daß die erste Platte (39A) in der hinteren Position über eine gespannte Feder (52) auf der Rampe (51) des Rollensatzes (37) aufliegt.

4. Betätigungsvorrichtung nach Anspruch 2 oder 3, **dadurch gekennzeichnet**, daß bei der hinteren Position der ersten Platte (39A) die Rolle, die mit der zweiten Platte (39B) in Berührung steht, auf die ortsfeste Achse (A2) parallel zur Achse (Al) des Hydraulikzylinders (14) ausgerichtet ist.

5. Betätigungsvorrichtung nach einem der vorangehenden Ansprüche, **dadurch gekennzeichnet**, daß sich die Welle (31) des Elektromotors (11) entlang der Achse (A1) des Hydraulikzylinders (14) erstreckt.

6. Betätigungsvorrichtung nach Anspruch 5, **dadurch gekennzeichnet**, daß die Kraftübertragung (12) zwei Organe umfaßt, die in einem Schrauben-Mutter-Verhältnis zueinander stehen, und zwar einen Gewindestift (34), der fest mit der Welle (31) des Elektromotors (11) verbunden ist, und eine Gewindebuchse, die mit dem Gewindestift (34) verschraubt ist und das besagte Organ (16) bildet.

7. Betätigungsvorrichtung nach Anspruch 6, **dadurch gekennzeichnet**, daß die elastischen Unterstützungsmittl (15) eine Feder (48) in der Ausführung als Schraubenfeder umfassen, die koaxial mit dem Hydraulikzylinder (14) angeordnet ist.

8. Betätigungsvorrichtung nach Anspruch 7, **dadurch gekennzeichnet**, daß sich die Feder (48) der elastischen Unterstützungsmittel (15) um die Gewindebuchse herum erstreckt, die das Organ (16) der Kraftübertragung (12) bildet.

9. Betätigungsvorrichtung nach einem der vorangehenden Ansprüche, **dadurch gekennzeichnet**, daß sie in getrennter Ausführung einerseits aus einer mechanischen Untergruppe (10A), die den Elektromotor (11), die Kraftübertragung (12), die elastischen Unterstützungsmittel (15) und die mechanischen Ausgleichmittel (17) umfaßt, und andererseits aus einer hydraulischen Untergruppe (10B) besteht, die an der mechanischen Untergruppe (10A) angefügt ist und die den Hydraulikzylinder (14) umfaßt.

10. Betätigungsvorrichtung nach Anspruch 9, **dadurch gekennzeichnet**, daß der Körper (27) des Hydraulikzylinders (14) zumindest teilweise axial in die mechanische Untergruppe (10A) eingesetzt ist.

11. Betätigungsvorrichtung nach einem der vorangehenden Ansprüche, **dadurch gekennzeichnet**, daß einer der Rollensätze (37) ein Potentiometer (68) steuert.

12. Betätigungsvorrichtung nach einem der vorangehenden Ansprüche, **dadurch gekennzeichnet**, daß der Hydraulikzylinder (14) durch ein Magnetventil (63) gesteuert wird, das, wenn es mit Strom versorgt wird, geschlossen ist.

FIG.1

FIG.2    FIG.3    FIG.8

FIG.7

FIG.4

FIG.5

FIG.6